# NEUE EUROPÄISCHE PATENTSCHRIFT

(11) **EP 1 130 342 B2**
(45) Veröffentlichungstag und Bekanntmachung des Hinweises auf die Entscheidung über den Einspruch: **18.01.2017**
(45) Hinweis auf die Patenterteilung: 23.11.2005
(21) Anmeldenummer: 01103726.4
(22) Anmeldetag: 15.02.2001
(51) Int. Cl.: F24H 9/14

(54) **Baueinheit für eine Kompaktheizungsanlage**
Assembly for a compact heating installation
Module pour installation de chauffage compacte

(30) Priorität: 21.02.2000 DE 10007873
(43) Veröffentlichungstag der Anmeldung: 05.09.2001
(73) Patentinhaber: GRUNDFOS A/S, DK-8850 Bjerringbro (DK)
(72) Erfinder: Höj, Finn Mathiesen, 8200 Aarhuis-N (DK)
(74) Vertreter: Vollmann, Heiko

(56) Entgegenhaltungen:
- EP-A- 0 568 122
- EP-A- 0 652 408
- EP-A- 0 797 057
- EP-A- 0 825 387
- EP-A- 0 911 590
- DE-A- 19 751 515

## Beschreibung

Die Erfindung betrifft eine Baueinheit für eine Kompaktheizungsanlage gemäß den im Oberbegriff des Anspruchs 1 angegebenen Merkmalen.

Derartige Kompaktheizungsanlagen (auch Gasthermen genannt) dienen entweder nur zur Raumheizung oder zur kombinierten Raumheizung und Warmwasserbereitung. Sie vereinen eine Vielzahl von Einzelkomponenten in einem kompakten Gehäuse. Während bei älteren Konstruktionen die Einzelelement über Rohre, sogenannte fittings einzeln miteinanderverbunden wurden, was relativ aufwendig war, geht man seit geraumer Zeit vermehrt dazu über, den gesamten Verrohrungskomplex einschließlich Aufnahme für die einzelnen Aggregate wie Pumpe, Ventile und dergleichen als Baueinheit auszuführen, die üblicherweise aus mehreren Spritzgussteilen aus Kunststoff gefertigt ist. Der Einsatz einer solchen Baueinheit hat den Vorteil, dass insbesondere bei großen Stückzahlen die Fertigungs- und Montagekosten ganz erheblich gesenkt werden können. Sie hat aber darüber hinaus den Nachteil, dass für unterschiedliche Systeme in der Regel auch unterschiedliche Baueinheiten eingesetzt werden, was dazu führt, dass eine Vielzahl von Werkzeugen vorzuhalten ist, was erhebliche Kosten bedingt.

Eine Kompaktheizungsanlage der eingangs erwähnten Art ist aus DE 197 51 515 A1 bekannt. Die dort beschriebene Baueinheit weist ein an das Pumpengehäuse anschließendes Gehäuse auf, das einen Luftabscheider, ein Schaltorgan sowie eine zentrale Kammer aufweist, in die der Saugmund der Pumpe mündet. Daran anschließend kann ein Adaptergehäuse vorgesehen sein, das weitere Bauteile umfasst.

Aufgrund dessen, dass in Achsrichtung des Laufrads der Pumpe gesehen weitere Gehäuse anschließen, weist diese Baueinheit eine vergleichsweise große Bautiefe auf. Darüber hinaus verlangt diese Baueinheit noch eine Vielzahl von Einzelverrohrungen, um die Anschlüsse der Baueinheit leitungszuverbinden. Schließlich sind die dort beschriebenen Ausführungen im Wesentlichen nur für einen speziellen Gasthermentyp bestimmt und geeignet.

Vor diesem Stand der Technik liegt der Erfindung die Aufgabe zugrunde, eine Baueinheit der eingangs genannten Art so weiterzubilden, dass die vorgenannten Nachteile vermieden werden, insbesondere eine kompakte Baueinheit erhalten wird, die für Gasthermen unterschiedlichen Typs einsetzbar und kostengünstig herstellbar ist.

Diese Aufgabe wird gemäß der Erfindung durch die in Anspruch 1 angegebenen Merkmale gelöst. Vorteilhafte Ausgestaltungen sind in Unter ansprüchen sowie der nachfolgenden Beschreibung und Zeichnung angegeben.

Grundgedanke der vorliegenden Erfindung ist es, die Baueinheit so auszubilden, dass das Pumpenaggregat, bestehend aus Elektromotor mit daran angeschlossener Kreiselpumpe, nicht, wie aus dem Stand der Technik bekannt, in Achsrichtung der Pumpe mit weiteren Anschlussgehäusen bestückt wird, sondern dies vielmehr zwischen zwei Armaturengehäusen eingegliedert wird, wobei diese beiden in montiertem Zustand zweckmäßigerweise rechts und links vom Pumpengehäuse angeordneten Armaturengehäuse jeweils ein Paar von rückwärtigen Anschlüssen bilden, an die ein Plattenwärmetauscher als Sekundärwärmetauscher unmittelbar angeschlossen wird. Dabei ermöglicht die Anordnung der Armaturengehäuse neben dem Pumpengehäuse eine so geringe Bautiefe, dass ein Plattenwärmetauscher noch dahinter angeordnet werden kann.

Der Plattenwärmetauscher, der ein vergleichsweise schweres und stabiles Bauteil aus Metall ist, wird somit konstruktives Element der Baueinheit. Es wird also die Stabilität des Plattenwärmetauschers gezielt genutzt, um die Baueinheit zu versteifen.

Dabei ergibt sich eine besonders kompakte Bauausführung, wenn das Pumpenaggregat in Achsrichtung des Laufrads gesehen im Wesentlichen innerhalb der Kontur des rückwärtig angeschlossenen Plattenwärmetauschers liegt, d. h. in der Kontur liegt, deren Eckpunkte durch die vier paarweise angeordneten rückwärtigen Anschlüsse gebildet sind. Eine solche Anordnung dient einem sehr kompakten Aufbau der Therme.

Zweckmäßigerweise werden nach Möglichkeit alle im Bereich der Therme zwischen der Brennkammer und den Leitungsanschlüssen erforderlichen Komponenten in die Baueinheit integriert. Um das Pumpenaggregat hiervon möglichst unberührt zu lassen, ist es zweckmäßig, diese Komponenten in die Armaturengehäuse einzugliedern. Hierdurch wird der kompakte Aufbau der Baueinheit weiter gefördert. Es kann zudem hinsichtlich des Pumpenaggregats weitgehend auf vorhandene Konstruktionen zurückgegriffen werden, was die Herstellungskosten für die Baueinheit weiter senkt.

Besonders günstig ist es, wenn das Pumpengehäuse formschlüssig zwischen den Armaturengehäusen eingegliedert wird, da dann keine gesonderten Befestigungsvorrichtungen für das Pumpengehäuse erforderlich sind. Dies kann in einfacher Weise durch seitlich am Pumpengehäuse vorgesehene Vorsprünge erfolgen, die von den Armaturengehäusen umgriffen sind. Die Stabilität der so lediglich durch Formschluss miteinander verbundenen Gehäuseteile wird im Wesentlichen durch die Versteifungsplatte bzw. den Plattenwärmetauscher gewährleistet.

Wie das weiter unten beschriebene Ausführungsbeispiel verdeutlicht, kann die erfindungsgemäße Baueinheit aus z. B. drei ohne Schmelzkerne hergestellten Spritzgussteilen bestehen und somit kostengünstig gefertigt werden.

Wenn in eine solche Baueinheit, was zweckmäßig ist, ein Luftabscheider integriert werden soll, so ist es besonders günstig, diesen in dem saugseitigen Armaturengehäuse anzuordnen, also an dem Armaturengehäuse, das mit der Saugseite der Pumpe leitungsverbunden ist. Wenn die Baueinheit, was zum Einsatz bei Gasthermen üblich ist, ein 2/3-Wegeventil beinhaltet, das wahlweise den Primärwärmetauscherkreislauf mit dem Heizkreis oder dem Sekundärwärmetauscher verbindet, dann sollte dieses Ventil bevorzugt in dem druckseitigen Armaturengehäuse angeordnet sein. Die Konstruktion erfolgt dabei bevorzugt so, dass das druckseitige Armaturengehäuse wahlweise mit und ohne Ventil verwendet werden kann, damit für die Bauausführungen, bei denen ein solches Ventil nicht benötigt wird, die gleichen Gehäuseteile eingesetzt werden können.

Die Erfindung ist nachfolgend anhand eines in der Zeichnung dargestellten Ausführungsbeispiels näher erläutert. Es zeigen:
- Fig. 1: ein Schaltbild einer ersten Bauart einer Gastherme,
- Fig.4: in vereinfachter perspektivischer Darstellung eine Gastherme in montiertem Zustand,
- Fig. 5: in vergrößerter perspektivischer Darstellung die Baueinheit gemäß der Erfindung mit rückseitig angeschlossenem Plattenwärmetauscher,
- Fig. 6: in perspektivischer Darstellung eine Rückansicht der Baueinheit ohne Plattenwärmetauscher und ohne 2/3-Wegeventil,
- Fig. 7: in perspektivischer Darstellung das saugseitige Armaturengehäuse,
- Fig. 8: in perspektivischer Darstellung das Pumpengehäuse,
- Fig. 9: in perspektivischer Darstellung das druckseitige Armaturengehäuse und

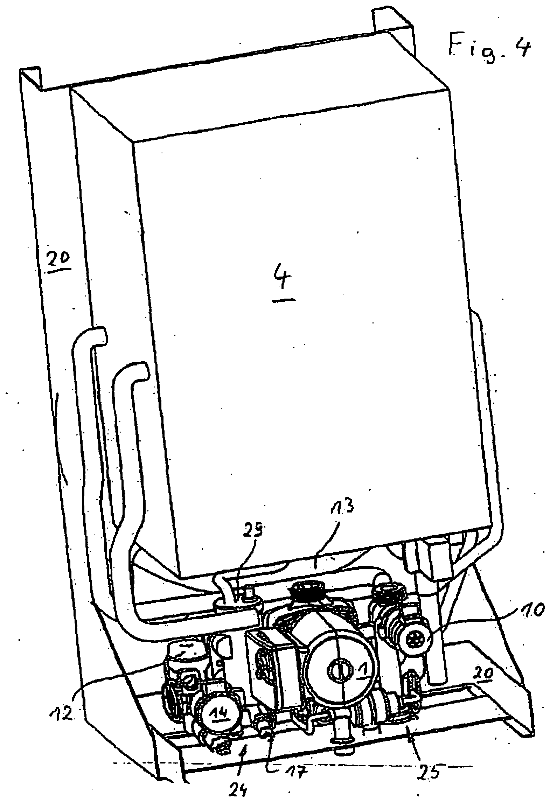

Sämtliche räumliche Angaben (oben, unten, ...) beziehen sich auf eine Ansicht gemäß Fig. 4, so, wie die Therme im Betriebszustand zu sehen ist.

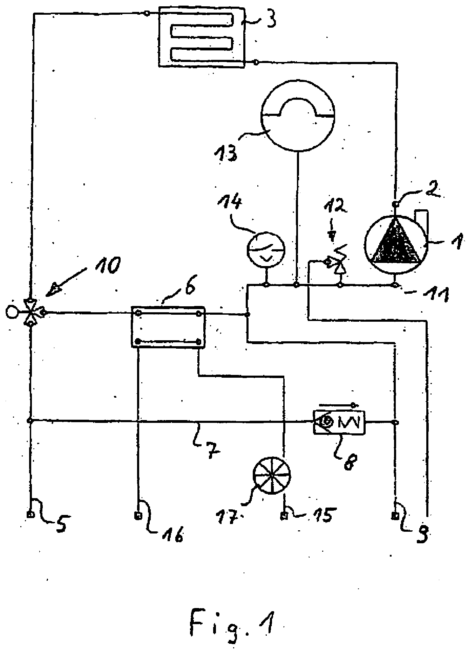

Anhand der Figuren 1 bis 3 sind zunächst die drei wesentlichen Bauarten dargestellt, in denen die erfindungsgemäße Baueinheit im Wesentlichen ohne konstruktive Veränderungen eingesetzt werden kann.

Die Kompaktheizungsanlage gemäß Fig. 1 weist ein Pumpenaggregat 1 auf, dessen druckseitiger Anschluss 2 mit einem Primärwärmetauscher 3 leitungsverbunden ist. Der Primärwärmetauscher 3 wird beispielsweise gasbeheizt und ist innerhalb einer Brennkammer 4 (Fig. 4) angeordnet. Der Ausgang des Primärwärmetauschers 3 ist über ein 2/3-Wegeventil 10 wahlweise mit einem Vorlauf 5 der Raumheizung oder dem Eingang eines Sekundärwärmetauschers 6 verbunden. An die Leitung zum Vorlauf 5 schließt eine Bypassleitung 7 an, in der ein einstellbares Überströmventil 8 integriert ist. Die Bypassleitung 7 mündet in einen Rücklauf 9 der Raumheizung, der wie auch der eine Ausgang des Sekundärwärmetauschers 6 mit einem saugseitigen Anschluss 11 der Pumpe 1 leitungsverbunden ist. Der saugseitige Anschluss 11 ist darüber hinaus leitungsverbunden mit einem Sicherheitsventil 12, das bei Überschreiten eines vorgegebenen Drucks öffnet, mit einem Druckausgleichsgefäß 13 sowie mit einem Druckschalter 14, der bei Unterschreiten eines vorbestimmten Drucks die Anlage abschaltet.

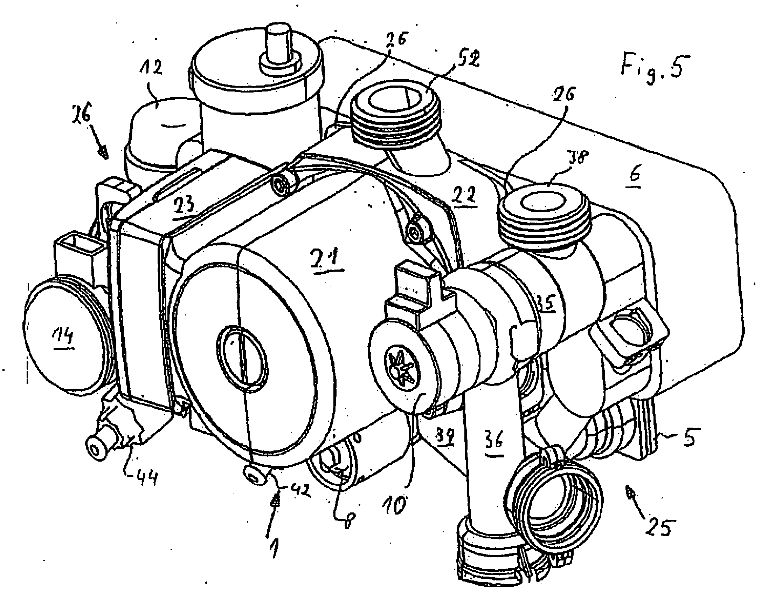

Der Sekundärwärmetauscher 6 ist auf seiner wärmeaufnehmenden Seite mit dem Wasserleitungsnetz 15 des Hauses verbunden. Der ausgangsseitige Anschluss 16 führt zur Warmwasserzapfstelle. In diese Leitung ist ein Flowsensor 17 integriert, dessen Signal das 2/3-Wegeventil schaltet. Die Funktion einer solchen Heizungsanlage ist hinlänglich bekannt, so dass sie hier nicht im Einzelnen beschrieben wird. Die anhand der Figuren 4 und 5 dargestellte Baueinheit umfasst alle vorbeschriebenen Komponenten mit Ausnahme des Primärwärmetauschers 3 und des Ausgleichsgefäßes 13.

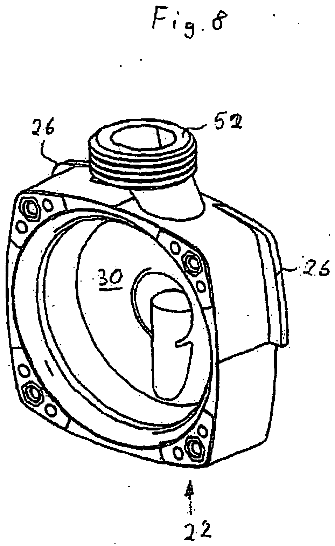

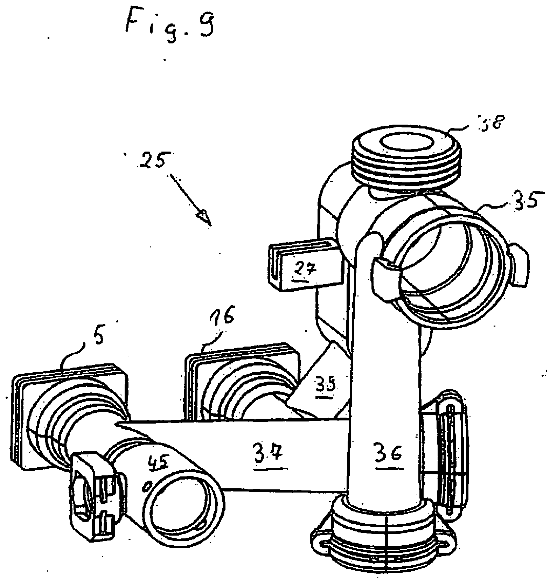

In Fig. 4ist beispielhaft der Aufbau einer Kompaktheizungsanlage dargestellt. Sie weist ein Traggestell 20 auf, das zur Wandbefestigung vorgesehen ist. Die gebäudeseitigen Anschlussleitungen sind hier von unten herangeführt. Den oberen und vorderen Bereich nimmt die Brennkammer 4 ein, die üblicherweise als in sich geschlossenes Gehäuse ausgebildet ist. Hinter der Brennkammer 4 befindet sich das Druckausgleichsgefäß 13. Unter der Brennkammer 4 ist die in Rede stehende Baueinheit angeordnet, die anhand der Figuren 5 bis 9 im Einzelnen dargestellt ist. Bei der Darstellung nach Fig. 4 sind aus Gründen der Übersicht Abschnitte der von der Baueinheit zum Primärwärmetauscher führenden Leitungen, insbesondere im Bereich der Anschlüsse der Baueinheit nicht dargestellt.

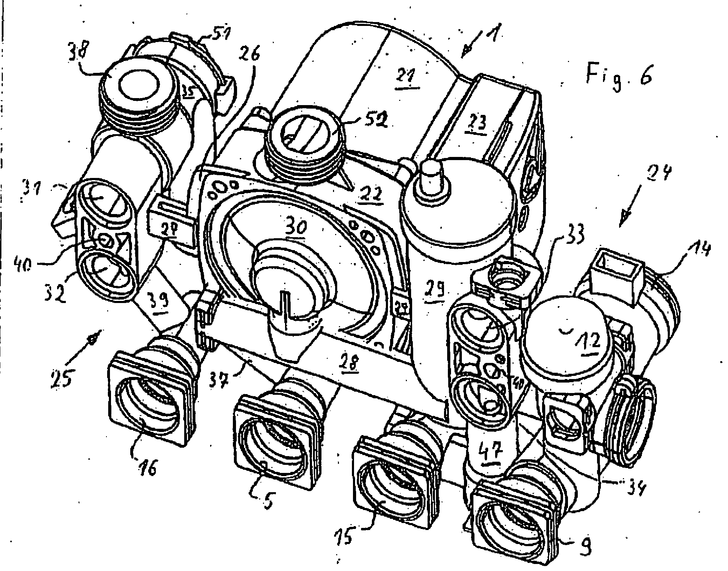

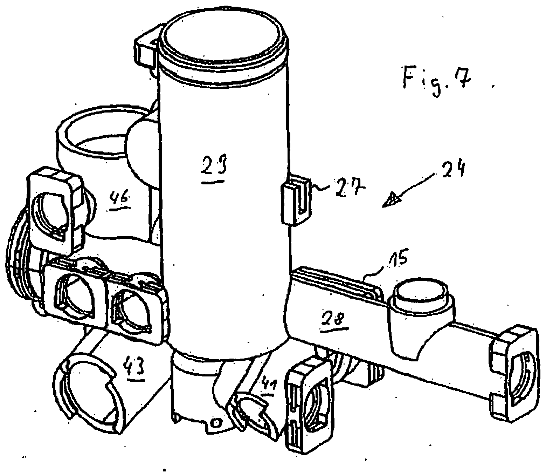

Wie sich aus den Figuren 5 und 6 ergibt, ist das Pumpenaggregat 1, von dem in den Figuren das Motorgehäuse 21, das Pumpengehäuse 22 sowie ein auf das Motorgehäuse 21 aufgesetzter Klemmenkasten 23 sichtbar sind, zwischen einem saugseitigen Armaturengehäuse 24 und einem druckseitigen Armaturengehäuse 25 formschlüssig eingegliedert. Hierzu weist das Pumpengehäuse 22 zwei flache seitliche Vorsprünge 26 auf, die zum Eingriff in zum Pumpengehäuse 22 hin vorspringende, von oben gesehen U-förmige und nach unten geschlossene Halterungen 27 an den Armaturengehäuse 24 und 25 vorgesehen sind. Darüber hinaus ist das Pumpengehäuse 22 an seiner Stirnseite im unteren Bereich mit dem saugseitigen Armaturengehäuse 24 verbunden, um die Leitungsverbindung zum saugseitigen Anschluss 11 der Pumpe herzustellen. Diese Verbindung ist armaturenseitig durch die in den Figuren 6 und 7 innerhalb des saugseitigen Armaturengehäuses 24 erkennbare Querleitung 28 gebildet, die unmittelbar hinter dem Pumpengehäuse 22 verläuft. Die Querleitung 28 mündet in einem Luftabscheider 29, der ebenfalls Teil des saugseitigen Armaturengehäuses 24 ist. Diese Querleitung 28, die an ihrem pumpenseitigen Ende offen ist, ist dort in einem entsprechenden Verschluss abgeschlossen. Die Leitungsverbindung innerhalb der Pumpe erfolgt über einen in der Stirnwand 30 des Pumpengehäuses vorgesehenen Rohrabschnitt, der in die Querleitung 28 mündet.

Jedes der Armaturengehäuse 24, 25 weist zwei rückwärtige und übereinander angeordnete Anschlüsse 31, 32 und 33, 34 für den Sekundärwärmetauscher 6 in Form eines Plattenwärmetauschers auf. Diese Anschlüsse 31, 32, 33 und 34 sind in Fig. 6 gut zu erkennen, die die Baueinheit von hinten mit abgenommenem Wärmetauscher zeigt. Der Anschluss 31 stellt den einströmseitigen Anschluss des Sekundärwärmetauschers 6 für den vom Primärwärmetauscher 3 beaufschlagten Heizkreis dar. Dieser Anschluss 31 führt innerhalb des druckseitigen Armaturengehäuses 25 zu dem 2/3-Wegeventil, das in das von vorne offene Ende des im Wesentlichen parallel zur Laufradachse verlaufenden Rohrabschnitts 35 eingeführt ist. Dieser Rohrabschnitt 35 trifft mit einem von unten kommenden Rohrabschnitt 36 zusammen, der über einen Rohrabschnitt 37 zu einem rückseitigen Anschluss 5 geführt ist, der den Vorlaufanschluss 5 für die Raumheizung bildet. In den Rohrabschnitt 35 mündet von oben ein Anschlussstutzen 38, der über eine nicht dargestellte Leitung mit dem Ausgang des Primärwärmetauschers 3 verbunden wird, so dass das Ventil 10 die am Stutzen 38 angeschlossene Leitung entweder mit dem Vorlaufanschluss 5 für die Raumheizung oder mit dem Anschluss 31 verbindet, der in den Plattenwörmetauscher 6 mündet.

Der untere Anschluss 32 des Anschlusspaares 31, 32 des druckseitigen Armaturengehäuses 25 ist über einen Rohrabschnitt 39 mit dem Anschluss 16 verbunden, der den ausgangsseitigen Brauchwasseranschluss bildet.

Das saugseitige Anschlussgehäuse 24 weist ein Anschlusspaar 33, 34 auf, von dem der untere Anschluss 34 mit dem ebenfalls zur Rückseite herausgeführten Anschluss 15 für das Wasserleitungsnetz verbunden ist. Über den Anschluss 34 wird also in den Sekundärwärmetauscher 6 das zu erwärmende Brauchwasser eingeleitet. Über den Anschluss 33 fließt das aus dem Sekundärwärmetauscher 6 kommende Heizwasser zum Saugstutzen der Pumpe. Der Anschluss 33 ist also mit dem rückseitigen Anschluss 9 leitungsverbunden.

Innerhalb des Plattenwärmetauschers 6 sind Gewindebuchsen eingelassen, welche mit entsprechenden Bohrungen 40 zwischen den Anschlüssen 31 und 32 bzw. 33 und 34 in den jeweiligen Armaturengehäuse 24 und 25 fluchten. Über diese Bohrungen 40 wird der Plattenwärmetauscher 6 mittels von der Vorderseite in die Bohrungen 40 eingeführte Schrauben mechanisch fest mit den Armaturengehäusen 24 und 25 verbunden. Über in den Anschlüssen 31 bis 34 liegende Dichtungen wird zugleich der Plattenwärmetauscher auch dicht angeschlossen. Der Plattenwärmetauscher 6 bildet somit auch ein konstruktives Bauteil für die Baueinheit und stabilisiert diese.

Wie insbesondere die Figuren 4 bis 9 zeigen, sind sämtliche Gehäuseteile der Baueinheit (Pumpengehäuse 22, Armaturengehäuse 24, 25) konstruktiv so ausgelegt, dass sie als Spritzgussteile ohne Schmelzkerne hergestellt werden können. Etwa verbleibende nicht genutzte Anschlüsse werden durch entsprechende Abschlussteile dicht verschlossen. Im Übrigen können über derartige fertigungsbedingt zusätzliche Anschlüsse der Baueinheit, wie beispielsweise am unteren Ende des Rohrabschnitts 36 oder am rechten Ende des Rohrabschnitts 37, Zusatzaggregate angeschlossen werden, wie beispielsweise Filter, Ventile oder dergleichen, sofern hierfür Bedarf besteht.

In der vorstehend beschriebenen Baueinheit ist beispielsweise in dem schräg nach oben zum Anschluss 15 verlaufenden Rohrabschnitt 41 ein Filter 42 für das einströmende Brauchwasser eingegliedert. In einem jenseits des Luftabscheiders 29 ebenfalls schräg nach oben und zum Anschluss 9 verlaufenden Rohrabschnitt 43 ist ein Filter 44 für den Raumheizungskreis eingegliedert. Das Überströmventil 8 ist in einem Rohrabschnitt 45 des druckseitigen Anschlussgehäuses 25 eingegliedert, der seitlich über eine Bypassleitung mit dem saugseitigen Armaturengehäuse 24 verbunden ist.

Mit der zum Sauganschluss 11 der Pumpe führenden Querleitung 28 des saugseitigen Armaturengehäuses 24 steht der Luftabscheider 29 in Leitungsverbindung sowie nachfolgend ein ebenfalls vertikal gerichteter Rohrabschnitt 46, in den das Sicherheitsventil 12 eingegliedert ist. Weiter an die Querleitung angeschlossen ist der Druckschalter 14, wie insbesondere den Figuren 5 und 7 zu entnehmen ist. Der Flowsensor 17 ist in einen vertikal verlaufenden Rohrabschnitt 47 des saugseitigen Armaturengehäuses 24 eingegliedert.

Die vorstehend beschriebene Baueinheit ist zum Einbau in eine Gastherme gemäß Schaltungsanordnung nach Fig. 1 vorgesehen. Dabei wird der als Plattenwärmetauscher ausgelegte Sekundärwärmetauscher 6, wie an sich bekannt, im Gegenstrom betrieben. Er bildet zugleich eine mechanische Plattform für die übrigen Teile 22, 24, 25 der Baueinheit.

Die Kanalanordnung innerhalb der Armaturengehäuse 24 und 25 kann den anschlussseitigen Anforderungen entsprechend variiert werden. So ist es zwar zweckmäßig, wie im Ausführungsbeispiel alle Anschlüsse 16, 5, 15, 9 der Baueinheit rückseitig in einer Ebene herauszuführen, doch können diese Anschlüsse auch nach unten oder zu einer anderen Richtung oder in anderer Anordnung herausgeführt werden, wenn dies gewünscht wird.

So können die Anschlussgehäuse 24 und 25 grundsätzlich auch in umgekehrter Anordnung vorgesehen sein, d. h. in Darstellung nach Fig. 4 das druckseitige Anschlussgehäuse auf der von der Pumpe linken und das saugseitige Anschlussgehäuse auf der von der Pumpe rechten Seite, ohne das erfindungsgemäße Konstruktionsprinzip zu verlassen.

### Bezugszeichenliste

- 1 -: Pumpenaggregat
- 2 -: druckseitiger Anschluss der Pumpe
- 3 -: Primärwärmetauscher in Fig. 1
- 4 -: Brennkammer in Fig. 4
- 5 -: Anschluss zum Vorlauf der Raumheizung
- 6 -: Sekundärwärmetauscher in Fig. 1 und 5
- 7 -: Bypassleitung
- 8 -: Überströmventil
- 9 -: Anschluss zum Rücklauf der Raumheizung
- 10 -: 2/3-Wegeventil
- 11 -: saugseitiger Anschluss der Pumpe
- 12 -: Sicherheitsventil
- 13 -: Druckausgleichsgefäß
- 14 -: Druckschalter
- 15 -: Anschluss zum Wasserleitungsnetz
- 16 -: Warmwasseranschluss
- 17 -: Flowsensor
- 18 -: Wärmetauscher in Fig. 2
- 19 -: Primärwärmetauscher in Fig. 3
- 20 -: Traggestell
- 21 -: Motorgehäuse
- 22 -: Pumpengehäuse
- 23 -: Klemmenkasten
- 24 -: saugseitiges Armaturengehäuse
- 25 -: druckseitiges Armaturengehäuse
- 26 -: Vorsprünge am Pumpengehäuse
- 27 -: Halterungen an den Armaturengehäusen
- 28 -: Querleitung in 24
- 29 -: Luftabscheider
- 30 -: Stirnwand in 22
- 31 -: Anschlüsse für Plattenwärmetauscher in 25
- 32 -: Anschlüsse für Plattenwärmetauscher in 25
- 33 -: Anschlüsse für Plattenwärmetauscher in 24
- 34 -: Anschlüsse für Plattenwärmetauscher in 24
- 35 -: Rohrabschnitt in 25
- 36 -: Rohrabschnitt in 25
- 37 -: Rohrabschnitt in 25
- 38 -: Anschlussstutzen von 25
- 39 -: Rohrabschnitt in 25
- 40 -: Bohrung
- 41 -: Rohrabschnitt in 24
- 42 -: Filter
- 43 -: Rohrabschnitt in 24
- 44 -: Filter
- 45 -: Rohrabschnitt in 25
- 46 -: Rohrabschnitt in 24
- 47 -: Rohrabschnitt in 24
- 51 -: Anschlussstutzen
- 52 -: Druckstutzen

## Patentansprüche

1. Baueinheit für eine Kompaktheizungsanlage, insbesondere für eine Gastherme mit zwei Heizkreisen, einem für die Raumheizung und einem für Warmwasserbereitung, mit einem Kreiselpumpenaggregat (1), bestehend aus einem Elektromotor mit daran angeschlossener Kreiselpumpe, mit einem Motorgehäuse (21), mit einem Pumpengehäuse (22), mit einem weiteren sich an das Pumpengehäuse anschließenden Gehäuse und mit vier rückwärtigen, in einer Ebene liegenden und paarweise angeordneten Anschlüssen (31 - 34), **dadurch gekennzeichnet, dass** sich an das Pumpengehäuse (22) zu zwei voneinander abgewandten Seiten Armaturengehäuse (24, 25) anschließen, welche jeweils ein Paar (31, 32 und 33, 34) der rückwärtigen Anschlüsse bilden, wobei das Pumpenaggregat zwischen den Armaturgehäusen (24, 25) eingegliedert ist und die Armaturgehäuse (24, 25) in montiertem Zustand rechts und links vom Pumpengehäuse (22) angeordnet sind und wobei die Baueinheit im Bereich der vier paarweise angeordneten rückwärtigen Anschlüsse (31 - 34) eine Versteifungsplatte in Form eines an die vier paarweise angeordneten rückwärtigen Anschlüsse (31 - 34) angeschlossenen Plattenwärmetauschers (6) aufweist.

2. Baueinheit nach Anspruch 1, **dadurch gekennzeichnet, dass** das Pumpenaggregat (1) in Achsrichtung des Laufrads gesehen im wesentlichen innerhalb einer Kontur liegt, deren Eckpunkte durch die vier paarweise angeordneten rückwärtigen Anschlüsse (31 - 34) gebildet sind.

3. Baueinheit nach einem der vorherigen Ansprüche, **dadurch gekennzeichnet, dass** die Armaturengehäuse (24. 25) ein Sicherheitsventil (12), ein Dreiwegeventil (10), einen Drucksensor (14), einen Flowsensor (17), einen Filter (42, 44) und/oder einen Luftabscheider (29) aufweisen.

4. Baueinheit nach einem der vorhergehenden Ansprüche, **dadurch gekennzeichnet, dass** das Pumpengehäuse (22) formschlüssig zwischen den Armaturengehäusen (24, 25) eingegliedert ist.

5. Baueinheit nach einem der vorhergehenden Ansprüche, **dadurch gekennzeichnet, dass** das Pumpengehäuse (22) und die Armaturengehäuse (24, 25) jeweils als vorzugsweise ohne Schmelzkerne hergestellte Spritzgussteile aus Kunststoff gefertigt sind.

6. Baueinheit nach einem der vorhergehenden Ansprüche, **dadurch gekennzeichnet, dass** der Luftabscheider (29) dem saugseitigen Armaturengehäuse (24) zugeordnet ist.

## Claims

1. A construction unit for a compact heating facility, in particular for a gas heater with two heating circuits, one for the room heating and one for the provision of hot water, with a centrifugal pump assembly (1), consisting of an electric motor with a centrifugal pump connected thereto, with a motor casing (21), with a pump casing (22), with a further casing connecting to the pump casing, and with four rearward connections (31-34) which lie in a plane and are arranged in pairs, **characterised in that** fittings casings (24, 25) which in each case form a pair (31, 32 and 33, 34) of the rearward connections, connect onto the pump casing (22) at two sides which are away from one another, wherein the pump assembly is integrated between the fittings casings (24, 25), and the fittings casings (24, 25) in the assembled condition are arranged at the right and left of the pump casing (22) and wherein the construction unit in the region of the four rearward connections (31-34) arranged in pairs comprises a stiffening plate in the form of a plate heat exchanger (6) which is connected to the four rearward connections (31-34) arranged in pairs.

2. A construction unit according to claim 1, **characterised in that** the pump assembly (1) seen in the axial direction of the impeller lies essentially within contour whose corner points are formed by the four rearward connections (31-34) arranged in pairs.

3. A construction unit according to one of the preceding claims, **characterised in that** the fittings casings (24, 25) comprise a safety valve (12), a three-way valve (10), a pressure sensor (14), a flow sensor (17), a filter (42, 44) and/or an air separator (29).

4. A construction unit according to one of the preceding claims, **characterised in that** the pump casing (22) is incorporated between the fittings casings (24, 25) with a positive fit.

5. A construction unit according to one of the preceding claims, **characterised in that** the pump casing (22) and the fittings casings (24, 25) are in each case manufactured as injection moulded parts of plastic preferably without fusible cores.

6. A construction unit according to one of the preceding claims, **characterised in that** the the air separator (29) is assigned to the suction-side fittings casing (24).

## Revendications

1. Module pour une installation de chauffage compacte, en particulier pour une chaudière à gaz à deux circuits de chauffage, un pour le chauffage de locaux et un pour la préparation d'eau chaude, comprenant un groupe moto-pompe centrifuge (1) constitué d'un moteur électrique et d'une pompe centrifuge y raccordée, un carter de moteur (21), un carter de pompe (22), un autre carter se raccordant au carter de pompe et quatre branchements arrière (31 - 34), situés dans un plan et disposés par paires, **caractérisé en ce que** des corps d'appareil de robinetterie (24, 25), qui forment chacun une paire respective (31, 32 et 33, 34) des branchements arrière, se raccordent au carter de pompe (22) sur deux côtés opposés l'un à l'autre, le groupe moto-pompe étant inséré entre les corps d'appareil de robinetterie (24, 25) et les corps d'appareil de robinetterie (24, 25) étant disposés, en état monté, à droite et à gauche du carter de pompe (22) et le module comportant, dans la zone des quatre branchements arrière (31 - 34) disposés par paires, une plaque de renfort sous forme d'échangeur de chaleur à plaques (6) raccordé aux quatre branchements arrière (31 - 34) disposés par paires.

2. Module selon la revendication 1, **caractérisé en ce que** le groupe moto-pompe (1) est situé, vu dans la direction d'axe du rotor, sensiblement à l'intérieur d'un contour dont les sommets sont formés par les quatre branchements arrière (31 - 34) disposés par paires.

3. Module selon l'une des revendications précédentes, **caractérisé en ce que** les corps d'appareil de robinetterie (24, 25) présentent une soupape de sûreté (12), une vanne à trois voies (10), un capteur de pression (14), un capteur de débit (17), un filtre (42, 44) et/ou un séparateur d'air (29).

4. Module selon l'une des revendications précédentes, **caractérisé en ce que** le carter de pompe (22) est inséré par complémentarité de formes entre les corps d'appareil de robinetterie (24, 25).

5. Module selon l'une des revendications précédentes, **caractérisé en ce que** le carter de pompe (22) et les corps d'appareil de robinetterie (24, 25) sont fabriqués chacun en un matériau synthétique sous forme de pièces moulées par injection produites, de préférence, sans noyaux fusibles.

6. Module selon l'une des revendications précédentes, **caractérisé en ce que** le séparateur d'air (29) est adjoint au corps d'appareil de robinetterie (24) situé du côté aspiration.
